# EUROPÄISCHE PATENTANMELDUNG

(11) **EP 4 206 035 A1**
(43) Veröffentlichungstag der Anmeldung: **05.07.2023**
(21) Anmeldenummer: 22020619.7
(22) Anmeldetag: 21.12.2022
(51) Int. Cl.: B60P 3/32, B60P 3/38, E04H 15/00

(54) **MOBILE AUFBLASBARE BEHAUSUNG**

(30) Priorität: 22.12.2021 AT 2002021
(71) Anmelder: Gentletent GmbH, 1120 Wien (AT)
(72) Erfinder: Rammer, Gernot, A-1050 Wien (AT)
(74) Vertreter: Keschmann, Marc

(57) **Zusammenfassung**

Bei einer mobilen Behausung mit einem unteren Raum und einem darüber angeordneten oberen Raum, wobei der Boden des oberen Raums zumindest abschnittsweise von einem aufblasbaren, im aufgeblasenen Zustand plattenartigen Bodenkörper (4,13) gebildet ist, dessen Deck- und Bodenlage aus einem flexiblen Material bestehen und durch eine Vielzahl von Verbindungsfäden oder -fasern miteinander verbunden und im aufgeblasenen Zustand in einem maximalen Normalabstand zueinander gehalten sind, und wobei der aufblasbare Bodenkörper (4,13) zumindest teilweise auf einem Stützkörper, wie z.B. einem Dach (2,12) aufliegt, weist der aufblasbare Bodenkörper (4,13) und/oder der Stützkörper, wie z.B. das Dach (2,12), eine Durchstiegsöffnung (9,10,17) auf, über welche der untere und der obere Raum miteinander verbunden sind.

## Beschreibung

Die Erfindung betrifft eine mobile Behausung mit einem unteren Raum und einem darüber angeordneten oberen Raum, wobei der Boden des oberen Raums zumindest abschnittsweise von einem aufblasbaren, im aufgeblasenen Zustand plattenartigen Bodenkörper gebildet ist, dessen Deck- und Bodenlage aus einem flexiblen Material bestehen und durch eine Vielzahl von Verbindungsfäden oder -fasern miteinander verbunden und im aufgeblasenen Zustand in einem maximalen Normalabstand zueinander gehalten sind, und wobei der aufblasbare Bodenkörper zumindest teilweise auf einem Stützkörper, wie z.B. einem Dach aufliegt.

Eine derartige Behausung ist beispielswiese in der WO 2017/201555 A1 beschrieben. Die WO 2017/201555 A1 offenbart ein auf einem Fahrzeugdach angeordnetes aufblasbares Zelt, dessen Bodenkörper im aufgeblasenen Zustand ein plattenartiges und selbstragendes Element bildet, welches sich ohne externe Abstützung über den Rand des Fahrzeugdachs hinaus erstrecken kann, um auf diese Weise eine große Liegefläche zu bieten. Dadurch wird eine mobile Behausung geschaffen, deren unterer Raum vom Fahrzeuginnenraum und deren oberer Raum vom Zelt gebildet wird.

Nachteilig bei dieser Ausbildung ist jedoch, dass das Betreten des Zelts lediglich über eine außerhalb des Fahrzeugs angeordnete Leiter möglich ist. Weiters ist das Dachzelt bei niedrigen Außentemperaturen nur beschränkt nutzbar, wenn es nicht mit einer eigenen Heizung ausgestattet ist.

Der vorliegenden Erfindung liegt daher die Aufgabe zugrunde, die oben genannten Nachteile zu überwinden und eine mobile Behausung zu schaffen, die einen großen und flexibel nutzbaren Innenraum aufweist.

Zur Lösung dieser Aufgabe sieht die Erfindung bei einer mobilen Behausung der eingangs genannten Art im Wesentlichen vor, dass der aufblasbare Bodenkörper und/oder der Stützkörper, wie z.B. das Dach, eine Durchstiegsöffnung aufweist, über welche der untere und der obere Raum miteinander verbunden sind. Auf Grund der Durchstiegsöffnung können der untere und der obere Raum zu einem zusammenhängenden Wohn- und/oder Schlafraum verbunden werden, sodass insgesamt ein überaus großes Raumvolumen zur Verfügung steht. Für die Nutzung des oberen Raums muss die Behausung nicht verlassen und von außen betreten werden, sondern es steht über die Durchstiegsöffnung eine direkter Zugang vom unteren Raum aus zur Verfügung. Die Durchstiegsöffnung ermöglicht weiteres eine Luftzirkulation zwischen dem unteren und dem oberen Raum, sodass eine einzige Heizung, die bevorzugt im unteren Raum angeordnet ist, ausreicht, um beide Räume zu beheizen.

Der Stützkörper, auf dem der aufblasbare Bodenkörper zumindest teilweise aufliegt, kann beispielsweise von einem Dach, einem Dachträger, von Wänden einer Decke oder von einem Gerüst gebildet sein. Der Stützkörper ist insbesondere derart ausgebildet und/oder angeordnet, dass sich unterhalb des aufblasbaren Bodenkörpers eine am höchsten Punkt gemessene Raumhöhe des unteren Raums von mindestens 1m, bevorzugt mindestens 1,5m ergibt.

Der Boden des oberen Raums wird zumindest abschnittsweise von einem aufblasbaren, im aufgeblasenen Zustand plattenartigen Bodenkörper gebildet, dessen Deck- und Bodenlage aus einem flexiblen Material bestehen und durch eine Vielzahl von Verbindungsfäden oder -fasern miteinander verbunden und im aufgeblasenen Zustand in einem maximalen Normalabstand zueinander gehalten sind. Ein solcher Boden bildet im aufgeblasenen Zustand ein formstabiles plattenförmiges Element aus, das die untere Begrenzung des oberen Raums bildet und als Liegefläche benutzbar ist. Der aufblasbare plattenförmige Bodenkörper hat insbesondere eine solche Formstabilität bzw. Steifheit, dass er verschiedenste Aufbauten zur Ausbildung des oberen Raums tragen kann. Auf Grund der Formstabilität des aufgeblasenen Bodenkörpers kann, wie dies einer bevorzugten Ausbildung entspricht, ein Teilbereich des Bodens im aufgeblasenen Zustand über den Rand des Stützkörpers, wie z.B. Dachs, vorragen und ist dort auch ohne das Vorsehen einer den vorragenden Bereich abstützenden Konstruktion belastbar, ohne dass ein Umknicken oder dgl. des vorragenden Bereichs zu befürchten ist. Im nicht aufgeblasenen Zustand hingegen ist der Boden nicht formstabil, da die Deck- und die Bodenlage des aufblasbaren Körpers aus einem flexiblen Material bestehen, das so zusammengelegt werden kann, dass der Boden, ggf. gemeinsam mit den übrigen den oberen Raum bildenden Elementen, im nicht aufgeblasenen Zustand auf den Stützkörper, wie z.B. das Dach, faltbar ist.

Die erforderliche Formstabilität und Steifigkeit des aufblasbaren Bodenkörpers wird dadurch erreicht, dass die Deck- und die Bodenlage durch eine Vielzahl von Verbindungsfäden oder -fasern miteinander verbunden und im aufgeblasenen Zustand in einem maximalen Normalabstand zueinander gehalten sind. Die Deck- und die Bodenlage werden hierbei von den Fäden bzw. Fasern vorzugsweise parallel zueinander gehalten, sodass tatsächlich eine plattenförmige Bodenkonstruktion entsteht. Die Fäden bzw. Fasern verlaufen dabei durch den mit Luft gefüllten Hohlraum des Körpers und erstrecken sich zwischen Deck -und Bodenlage vorzugsweise in zu den Lagen senkrechter Richtung. Die Fasern bzw. Fäden sind hierbei in einer solchen Dichte vorgesehen, dass die Deck- und die Bodenlage im aufgeblasenen Zustand jeweils eine im Wesentlichen ebene Fläche ausbilden, sodass der im Inneren des Körpers herrschende Überdruck keine Wölbungen hervorruft. Die Fasern bzw. Fäden sind hierbei vorzugsweise gleichmäßig über die Fläche der Deck- bzw. Bodenlage verteilt.

Bevorzugt ist vorgesehen, dass das flexible Material zur Aufnahme eines Überdrucks im Inneren des aufblasbaren Zeltbodens von 3-25 PSI, insbesondere 5-7 PSI ausgebildet ist. Ein derartiger Überdruck führt dazu, dass der Bodenkörper eine besonders hohe Formstabilität bzw. Steifigkeit erhält.

Eine Erhöhung der Stabilität wird nach einer bevorzugten Weiterbildung der Erfindung dadurch erreicht, dass die Verbindungsfäden bzw. -fasern miteinander verwoben sind. Aufblasbare Hohlkörper, deren Deck- und Bodenfläche durch miteinander verwobene Fäden bzw. Fasern miteinander verbunden sind, werden auch als Drop-Stitch-Konstruktionen bezeichnet, die hauptsächlich für Wassersportgeräte, nämlich sogenannte Stand Up Paddling (SUP) Boards, zum Einsatz gelangen. Das Prinzip der Drop-Stitch-Konstruktion beruht darauf, die Decken- und Bodenlage des Körpers mit vertikalen Verbindungsfasern zu verknüpfen und auch unter hohem Innendruck in der gewünschten Form zu halten. Die miteinander verwobenen Fasern bilden im Inneren des aufblasbaren Körpers ein Gewebe, das durch die große Zahl an Verknotungen sehr reißfest und formstabil ist und besonders hohen Belastungen standhält, dabei aber dennoch in unaufgepumptem Zustand kompakt zusammenlegbar ist.

Der erfindungsgemäß ausgebildete, aufblasbare Bodenkörper hat eine Reihe von vorteilhaften Eigenschaften. Der Boden macht die sonst erforderlichen gesonderten Abstützungen für über das Fahrzeugdach vorragende Bodenbereiche obsolet, woraus eine erhebliche Gewichtsersparnis sowie eine Reduktion des Packmaßes resultieren.

Hinsichtlich der Durchstiegsöffnung sind im Rahmen der Erfindung Ausbildungen möglich, bei denen lediglich der Stützkörper, wie z.B. das Dach, die Durchstiegsöffnung aufweist. In diesem Fall ist der aufblasbare Bodenkörper so angeordnet, dass er die Durchstiegsöffnung freilässt. Der aufblasbare Bodenkörper bildet somit nicht die gesamte Bodenfläche des oberen Raums aus, sondern ein Teil der Bodenfläche wird vom Stützkörper, wie z.B. dem Dach gebildet, auf dem der Bodenkörper abgestützt ist bzw. aufliegt. Alternativ kann der aufblasbare Bodenkörper auch denjenigen Bereich des Stützkörpers, wie z.B. Dachs, abdecken, der die Durchstiegsöffnung aufweist. Der aufblasbare Bodenkörper ist hierbei ebenfalls mit einer Durchstiegsöffnung versehen, wobei beide Durchstiegsöffnungen so zueinander positioniert sind, insbesondere so miteinander fluchten, dass eine Person die beiden Durchstiegsöffnungen problemlos durchsteigen kann.

Eine bevorzugte Ausführungsform der vorliegenden Erfindung sieht vor, dass der untere Raum von einem Innenraum eines Fahrzeugs, wie z.B. eines Kraftfahrzeugs oder Wohnwagens, gebildet ist und dass der aufblasbare Bodenkörper auf dem Fahrzeugdach oder einem darauf angebrachten Träger aufliegt. Dadurch kann ein Fahrzeug in einfacher und kostengünstiger Weise zu einer zweistöckigen Behausung erweitert werden, indem das Dach des Fahrzeugs eine Durchstiegsöffnung aufweist, über welche der Fahrzeuginnenraum mit einem oberhalb des Fahrzeugdachs angeordneten oberen Raum verbunden ist. Der sich unmittelbar oder mittelbar am Dach abstützende aufblasbare Bodenkörper dient hierbei zumindest bereichsweise als Boden des oberen Raums, der sich wie bereits erwähnt auch über die Dachfläche hinaus erstrecken kann, um die nutzbare Fläche und das Raumvolumen des oberen Raums zu vergrößern.

Der obere Raum kann bevorzugt als Schlafraum genutzt werden und ist daher mit Vorteil allseitig verschlossen oder verschließbar. Die Wände und die Decke des oberen Raums können hierbei grundsätzlich aus beliebigen Leichtbaumaterialien hergestellt sein, wobei zumindest die Wände aus einem flexiblen Material bestehen können, um ein platzsparendes Verstauen zu ermöglichen, wenn die Luft aus dem Bodenkörper ausgelassen wird.

Gemäß einer bevorzugten Ausbildung ist der obere Raum nach oben hin von einem Aufstell- oder Hubdach begrenzt, das von einer dem Fahrzeugdach benachbarten Position in eine von dem Fahrzeugdach beabstandete Position schwenkbar oder verlagerbar ist. Aufstell- und Hubdächer sind im Bereich der Campingbusse bekannt und werden in der Regel auf dem bestehenden Fahrzeugdach montiert, um nach dem Aufklappen einen zusätzlichen Schlafraum zwischen dem Fahrzeugdach und dem Aufstelldach zu schaffen, der über einen Dachausschnitt erreichbar ist. Im Unterschied zu herkömmlichen Ausführungen, bei denen die maximale Breite einer Liegefläche der Fahrzeug- bzw. Dachbreite entspricht, kann durch die erfindungsgemäße Anordnung eines aufblasbaren Bodenkörpers auf dem Dach unter dem aufgeklappten Aufstell- bzw. Hubdach ein über die Fahrzeug- bzw. Dachbreite vorragender Boden bereitgestellt werden, sodass beispielsweise ein Schlafraum nicht nur für zwei Personen sondern auch für 3, 4, 5 oder 6 Personen geschaffen werden kann.

Die Erfindung bietet im Vergleich zu mechanischen Lösungen einer Liegeflächenverbreiterung den Vorteile einer deutlich geringeren Aufbauhöhe des Aufstelldaches. Der aufblasbare Bodenkörper benötigt eingeklappt nur 1 bis 3 cm Aufbauhöhe. Damit kann die Klappdachkonstruktion und die Fahrzeughöhe insgesamt sehr niedrig gehalten werden, was die Tiefgaragentauglichkeit des Fahrzeugs verbessert.

In besonders vorteilhafter Weise ist der aufblasbare Bodenkörper direkt am Fahrzeugdach oder Wohnwagendach montiert, ohne dass eine eigene Unterkonstruktion benötigt wird. Bisher musste für den Einbau eines Aufstelldaches etwa bei Kastenwagenfahrzeugen oder Vans das Dach abgeschnitten und eine Unterschale konstruiert werden, welche die Liegefläche aufnimmt. Der aufblasbare Bodenkörper kann hingegen direkt auf dem Dach montiert werden. Dies erspart hohe Kosten und Gewicht im Vergleich zu herkömmlichen Lösungen.

Bevorzugt ist hierbei vorgesehen, dass die Durchstiegsöffnung im Fahrzeugdach ausgebildet ist und die Durchstiegsöffnung des Fahrzeugdachs vorzugsweise mit einer im aufblasbaren Bodenkörper ausgebildeten Durchstiegsöffnung fluchtet.

Die Durchstiegsöffnung kann an einer beliebigen Stelle im Dachbereich angeordnet werden. Etwa im Bereich des Hecks eines Fahrzeuges oder Wohnwagens oder auch in der Mitte.

Bevorzugt weist der aufblasbare Bodenkörper wenigstens einen sich beim Aufblasen seitlich über den Rand des Fahrzeugdachs hinaus auffaltbaren Bereich auf. Besonders bevorzugt weist der aufblasbare Bodenkörper an beiden Fahrzeugseiten jeweils einen sich beim Aufblasen seitlich über den Rand des Fahrzeugdachs hinaus auffaltbaren Bereich auf, sodass eine beidseitige Bodenverbreiterung über die Dachbreite hinaus geschaffen wird. Der aufblasbare Bodenkörper kann im aufgeblasenen Zustand auf jeder der beiden Fahrzeugseiten überkragen oder auch nur auf einer Fahrzeugseite. Die Bodenplattform kann das Dach dabei auf jeder der betroffenen Seiten um bis zu 60cm überkragen ohne zum Boden hin abgestützt werden zu müssen.

Bevorzugt weist der obere Raum flexible Seitenwände auf, die einerseits mit dem Aufstell- oder Hubdach und andererseits mit einem Rand des aufblasbaren Bodenkörpers verbunden sind. Dadurch wird ein dichter Abschluss des Raum zwischen dem Aufstell- bzw. Hubdach und dem Bodenkörper geschaffen.

Bevorzugt sind die Seitenwände des oberen Raums aufblasbar ausgebildet. Die Seitenwände können dabei aus dem oben beschriebenen DropStitch-Material bestehen oder aus einer "Rohr an Rohr"-Luftmatte oder aus einer Kombination aus stabilen Luftrohren als Stützrahmen mit einer "Rohr an Rohr"-Luftmatte als Wandelement. Die "Rohr an Rohr"-Luftmatte als Wandelement hat dabei den Vorteil, dass gegenüber textilen Matten eine Isolierung gegeben ist und dass beim Nutzer das Gefühl einer festen Wand entsteht, die mehr Sicherheit vermittelt. Weiters hat eine derartige Wandausführung eine höhere Sturmstabilität als textile Wände. Unter einer "Rohr an Rohr"-Luftmatte wird hierbei eine Anordnung einer Vielzahl von nebeneinander angeordneten aufblasbaren Rohren verstanden, das im aufgeblasenen Zustand ein Wandelement ausbildet. Die Kammern der aufblasbaren Rohre können hierbei miteinander verbunden oder getrennt ausgeführt sein.

Bevorzugt kann hierbei auf einen gesonderten Hub- und Senkmechanismus für das Aufstell- oder Hubdach des Fahrzeugs verzichtet werden. Anstatt von Druckfedern und anderen mechanischen Lösungen kann das Anheben des Aufstell- oder Hubdachs durch das Aufblasen der Seitenwände erfolgen.

Bei einer anderen bevorzugten Ausbildung der Erfindung ist der untere Raum unter dem den Stützkörper, wie z.B. das Dach, überragenden Abschnitt des Bodenkörpers ausgebildet und die Durchstiegsöffnung ist im aufblasbaren Bodenkörper ausgebildet. Der Stützkörper, wie z.B. das Dach, dient bei dieser Ausführungsform daher als Abstützung für den aufblasbaren Bodenkörper, bildet selbst aber nicht notwendigerweise den unteren Raum. Als Abstützkörper kann eine beliebige Einheit verwendet werden, und es kann sich beispielsweise um ein Dach einer Energieversorgungseinheit, einer Sanitäreinheit oder auch eines Fahrzeugs handeln. Der den Stützkörper überragende Abschnitt des aufblasbaren Bodenkörpers bildet hierbei die Decke des außerhalb des genannten Stützkörpers, auf dem der Bodenkörper aufliegt, angeordneten unteren Raums. Dieser untere Raum kann Seitenwände aufweisen oder teilweise offen gestaltet sein. In dem den Stützkörper überragenden Abschnitt des aufblasbaren Bodenkörpers ist nun die Durchstiegsöffnung ausgebildet, über die man in den darüber angeordneten oberen Raum gelangt.

Gemäß einer bevorzugten Ausbildung der Erfindung trägt der aufblasbare Bodenkörper ein aufblasbares Zelt, welches den oberen Raum ausbildet. Das aufblasbare Zelt weist mit Vorteil ein aufblasbares Traggerüst und eine am Traggerüst abgestützte Zelthaut auf.

Der aufblasbare Boden kann als gesondertes Element ausgebildet sein, mit welchem das Traggerüst und/oder die Außenhaut des Zelts durch lösbare Verbindungsmittel verbunden ist oder wird. Die Verbindungsmittel können dabei Klettverschlüsse, Reißverschlüsse, Karabiner, eine Haken-Ösen-Verbindung, oder dgl. umfassen. Alternativ kann das Traggerüst und/oder die Zelthaut dauerhaft und unlösbar mit dem aufblasbaren Boden verbunden sein. Eine bevorzugte Ausführung sieht in diesem Zusammenhang vor, dass der aufblasbare Boden an seinen Rändern mit dem Traggerüst verbunden, insbesondere verklebt, verschweißt, vernäht oder lösbar verbunden, ist.

Eine besonders vorteilhafte Ausbildung ergibt sich, wenn auch das Traggerüst zumindest teilweise, bevorzugt aber vollständig, von wenigstens einem aufblasbaren Körper gebildet ist. Insbesondere weist das Traggerüst hierbei wenigstens ein aufblasbares, insbesondere mehrfach abgewinkeltes oder gebogenes, Rohr auf.

Dadurch, dass das Traggerüst des Zelts aufblasbar gestaltet ist, wird ein einfacher und schneller Auf- und Abbau gewährleistet. Das aufblasbare Rohr weist bevorzugt einen zwei- oder mehrschichtigen Aufbau auf. Ein Innenkörper bildet hierbei wenigstens eine aufblasbare Kammer aus und besteht bevorzugt aus einem gut dehnbaren Material, insbesondere einem Material mit einem Streckvermögen von min. 150%. Der Innenkörper besteht bevorzugt aus einem Polyurethan-Schlauch. Um den aufblasbaren Innenkörper herum ist ein strapazfähiger, abriebfester Außenschlauch angeordnet, an den sich der Innenkörper im aufgeblasenen Zustand innen eng anlegt. Das Material des Außenschlauchs ist bevorzugt zugfest ausgebildet und entsprechend der gewünschten Form des Traggerüsts vorgeformt. Der Außenschlauch besteht bevorzugt aus einem Gewebe, insbesondere einem Gewebe aus Polyamid oder Polyester, wie z.B. aus Cordura^{®}.

Die Ausführung des Traggerüsts als aufblasbarer Körper hat weiters den Vorteil, dass das Zelt ein geringeres Gesamtgewicht aufweist und der Aufbau durch eine einzige Person möglich ist.

Eine bevorzugte Ausbildung sieht in diesem Zusammenhang vor, dass das Traggerüst von einem einzigen, im aufgeblasenen Zustand mehrfach abgewinkelten bzw. gebogenen, vorzugsweise in sich geschlossenen, Rohr gebildet ist. Das einzige Rohr ist hierbei bevorzugt so geformt, dass es einen in sich geschlossenen Körper ausbildet, der weder ein Ende noch einen Anfang aufweist. Die Ausbildung des Traggerüsts aus einem in sich geschlossenen, aufblasbaren Rohr führt im aufgeblasenen Zustand zu einer überaus stabilen und steifen Konstruktion, wobei das Rohr, im Falle eines mehrschichtigen Aufbaus insbesondere dessen Außenschlauch, so vorgeformt ist, dass sich im aufgeblasenen Zustand automatisch die gewünschte Form des Traggerüsts einstellt.

Eine besonders vorteilhafte und stabile Form des Traggerüsts aus einem in sich geschlossenen Körper gelingt gemäß einer bevorzugten Weiterbildung der Erfindung dadurch, dass das rohrförmige Traggerüst wenigstens zwei U-förmig ausgebildete Rohrabschnitte mit gleicher Orientierung der U-Form und wenigstens zwei vorzugsweise gerade ausgebildete Verbindungsrohrabschnitte aufweist, welche die Enden der freien Schenkel der U-Form miteinander verbinden.

Ein solcherart ausgebildetes Traggerüst erlaubt einen überaus flexiblen Einsatz des Traggerüsts, wobei das Traggerüst entweder so aufgestellt werden kann, dass die Verbindungsrohrabschnitte die Bodenrohre des Traggerüsts ausbilden, oder so, dass die Verbindungsschenkel der U-Form der U-förmig ausgebildeten Rohrabschnitte die Bodenrohre des Traggerüsts ausbilden.

Eine bevorzugte Weiterbildung sieht vor, dass die von den U-förmig ausgebildeten Rohrabschnitten jeweils aufgespannten Ebenen zueinander geneigt angeordnet sind und insbesondere vom aufblasbaren Boden ausgehend nach oben hin divergierend verlaufen. Das Traggerüst benötigt somit eine relativ geringe Standfläche und unterstützt nach oben hin einen ausladenden Bereich der Zelthaut, sodass insgesamt ein relativ zur benötigten Standfläche großer Bereich von der Zelthaut überdeckt werden kann. Dies ist beispielsweise bei der Ausbildung des Zelts als Dachzelt, welches auf einem Fahrzeugdach angeordnet ist, von besonderem Vorteil, da dadurch eine große Spannweite des Zelts erreicht wird.

Das wenigstens eine aufblasbare Rohr des Traggerüsts kann wie bereits erwähnt aus einem Kunststoff-, insbesondere Polymermaterial bestehen. Dies ermöglicht eine besonders einfache und feste Verbindung mit dem Kunststoffmaterial des aufblasbaren Bodens. Das aufblasbare Rohr des Traggerüsts kann zu diesem Zweck eine in Längsrichtung des Rohrs verlaufende Anschlusslasche aufweisen, die mit dem aufblasbaren Boden verbunden, insbesondere verklebt oder verschweißt ist.

Der mit Luft befüllbare Hohlraum des Bodens und der mit Luft befüllbare Hohlraum des Rohres des Traggerüsts sind vorzugsweise nicht miteinander verbunden. Dies ermöglicht es, das Druckniveau entsprechend den jeweiligen Bedürfnissen anzupassen, wobei der Überdruck im aufblasbaren Boden vorzugsweise höher gewählt ist als im Traggerüst.

Das Traggerüst kann einerseits mit dem aufblasbaren Boden und andererseits mit der Zelthaut direkt verbunden sein. Bevorzugt ist in diesem Zusammenhang vorgesehen, dass die Zelthaut mit dem Traggerüst, insbesondere wenigstens einem aufblasbaren Rohr des Traggerüsts, verbunden, insbesondere verklebt, verschweiß oder vernäht, ist.

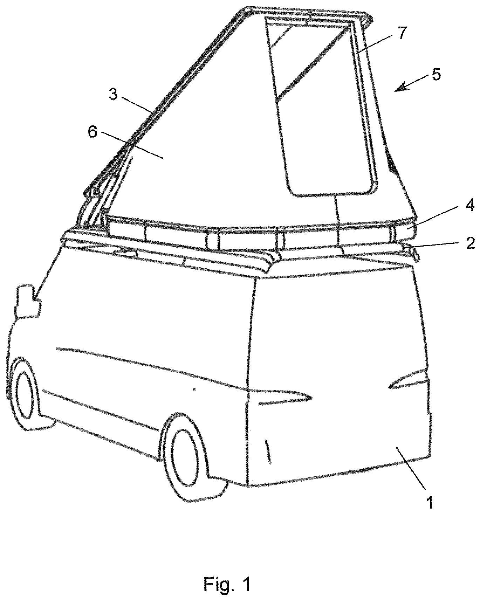

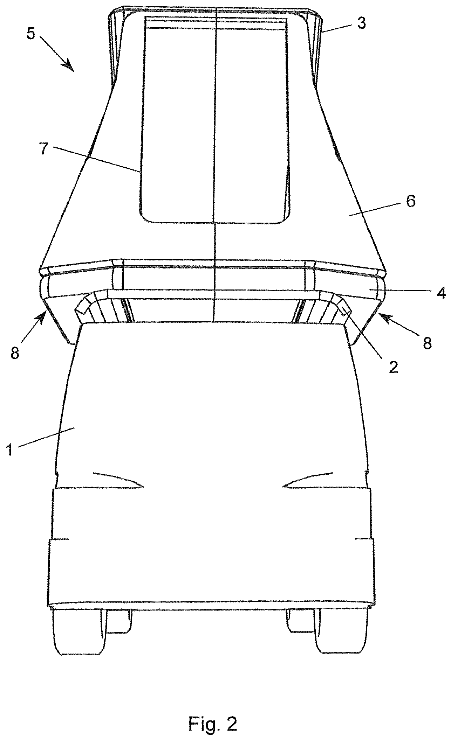

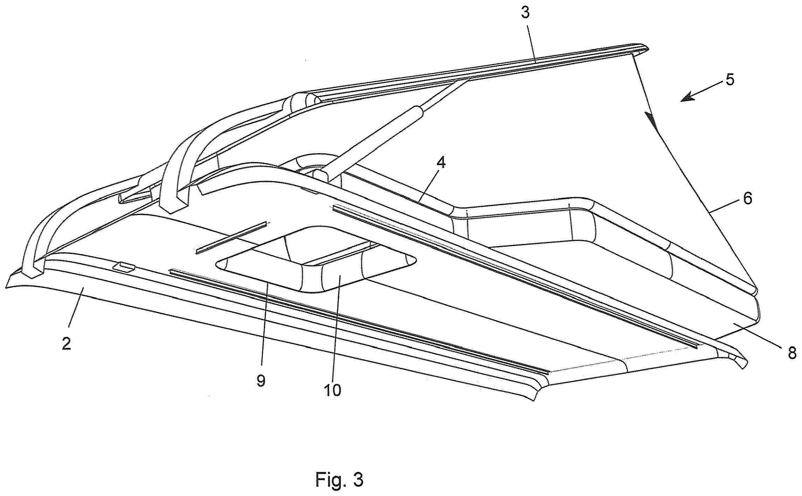

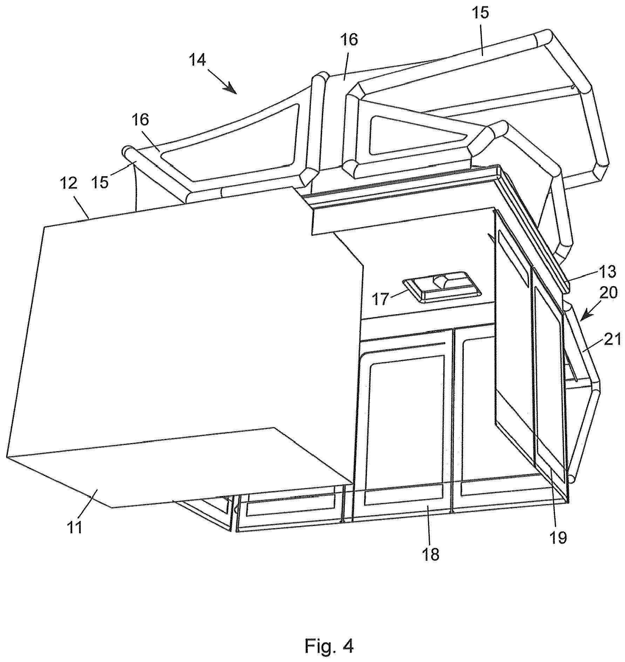

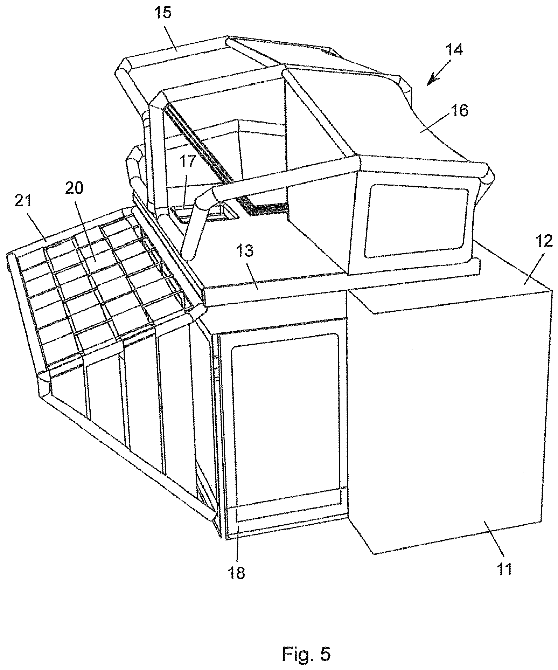

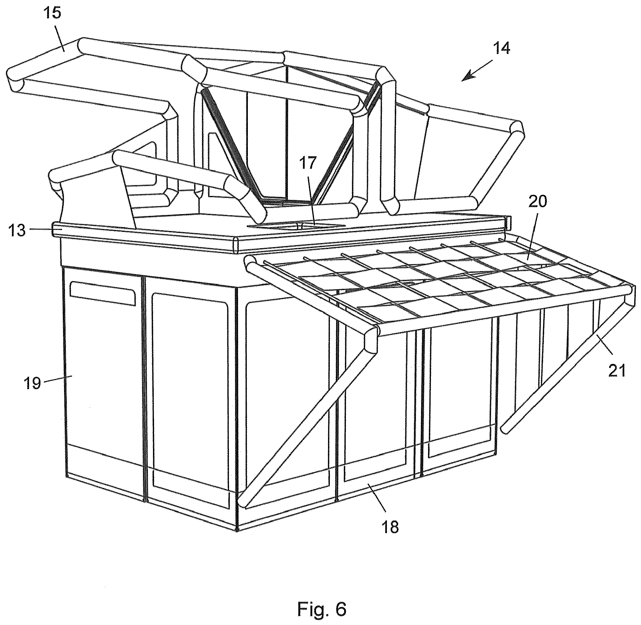

Die Erfindung wird nachfolgend anhand von in der Zeichnung schematisch dargestellten Ausführungsbeispielen näher erläutert. In dieser zeigen Fig. 1 eine erste Ausführungsform der erfindungsgemäßen Behausung, Fig. 2 eine Rückansicht der Behausung von Fig. 1, Fig. 3 eine Detailansicht der Dachkonstruktion der Behausung von Fig. 1, Fig. 4 eine zweite Ausführungsform der erfindungsgemäßen Behausung in einer perspektivischen Ansicht von unten, Fig. 5 die Behausung von Fig. 4 in einer perspektivischen Ansicht von oben und Fig. 6 eine Ansicht gemäß Fig. 5 von der anderen Seite.

In Fig. 1 ist ein Fahrzeug 1 dargestellt, welches als Campingbus ausgeführt ist und dessen Dach mit 2 bezeichnet ist. Auf dem Dach 2 ist ein Aufstelldach 3 schwenkbar befestigt, welches von einer dem Fahrzeugdach 2 benachbarten Position in die in Fig. 1 dargestellte Position aufgeklappt werden kann, um dadurch das Dachzelt 5 aufzufalten, das im eingeklappten Zustand des Aufstelldachs 3 in dem flachen Zwischenraum zwischen dem Aufstelldach 3 und dem Fahrzeugdach 2 verstaut war. Das Dachzelt 5 umfasst einen aufblasbaren Bodenkörper 4, der durch geeignete Mittel, wie z.B. das Einschieben von Kederschienen in geeignete Führungsschienen, auf dem Fahrzeugdach 2 befestigt ist. Das Dachzelt 5 weist weiters eine flexible Zelthaut 6 auf, welche einerseits am Aufstelldach 3 und andererseits am Bodenkörper 4 befestigt ist, um das Dachzelt 5 möglichst dicht zu verschließen. An der Rückseite umfasst das Dachzelt 5 ein Fenster 7, das mit einer durchsichtigen Abdeckung verschlossen werden kann. Ein oder mehrere Fenster kann bzw. können alternativ oder zusätzlich auch seitlich angebracht sein.

Wie in Fig. 2 ersichtlich ist, ist der aufblasbare Bodenkörper 4 so gestaltet, dass sich beim Aufblasen zwei Seitenabschnitte 8 rechts und links des Fahrzeugs 1 nach außen auffalten, wobei die Seitenabschnitte 8 über die Breite des Fahrzeugdachs 2 vorragen, um eine möglichst große Liegefläche bereitzustellen. Das Dachzelt 5 kann somit mindestens 4 Personen als Schlafmöglichkeit dienen.

In der Unteransicht des Fahrzeugdachs 2 gemäß Fig. 3 ist ersichtlich, dass das Fahrzeugdach 2 eine Durchstiegsöffnung 9 aufweist, die mit einer im Bodenkörper 4 ausgebildeten Durchstiegsöffnung 10 fluchtet. Dadurch wird eine zweistöckige mobile Behausung geschaffen, bei der Personen von einem unteren Aufenthaltsraum, der vom Fahrzeuginnenraum gebildet wird, direkt in den oberen Aufenthaltsraum, der vom Dachzelt 5 gebildet wird, gelangen können. In Fig. 3 ist weiters zu sehen, dass der aufblasbare Bodenkörper 4 sich im vorderen Bereich, in dem die Durchstiegsöffnung 10 ausgebildet ist, innerhalb der Breite des Fahrzeugdachs 2 erstreckt, wohingegen im hinteren Bereich Seitenabschnitte 8 vorgesehen sind, die über die Breite des Fahrzeugdachs 2 vorragen. Die Seitenabschnitte 8 sind hierbei bevorzugt einstückig mit dem Hauptkörper des Bodenkörpers 4 ausgebildet, wobei sie insbesondere die gleiche Luftkammer aufweisen wie der Hauptkörper. Alternativ kann der Bodenkörper 4 auch über seine gesamte Länge eine seitlich über das Fahrzeugdach vorragende Breite aufweisen. Weiters kann der Bodenkörper 4 auch einen Abschnitt aufweisen, der sich beim Aufblasen an der Rückseite des Fahrzeugs über das Fahrzeugdach 2 hinaus erstreckt.

Der Bodenkörper 4 stellt im aufgeblasenen Zustand einen formstabilen, plattartigen Körper dar, dessen Deck- und Bodenlage aus einem flexiblen Material bestehen und durch eine Vielzahl von Verbindungsfäden oder -fasern miteinander verbunden und im aufgeblasenen Zustand in einem maximalen Normalabstand zueinander gehalten sind.

Fig. 4, 5 und 6 zeigen eine alternative Ausführungsform der erfindungsgemäßen zweistöckigen Behausung, die eine Einheit 11 mit einem Dach 12 aufweist, auf der sich ein aufblasbarer Bodenkörper 13 abstützt. Der Bodenkörper 13 ragt hierbei vom Dach 12 vor und bildet unter sich einen unteren Aufenthaltsraum aus, der an den Seiten von schematisch dargestellten Wänden 18 und 19, z.B. aus Planen, Rollos oder dgl, abgegrenzt werden kann. Der Bodenkörper 13 bildet den Boden eines aufblasbaren Dachzelts 14 aus und stützt dieses. Das Dachzelt 14 umfasst ein Traggerüst aus aufblasbaren Rohren 15, das einen oberen Aufenthaltsraum überspannt und eine Zelthaut 16 trägt.

Der aufblasbare Bodenkörper 13 ist mit einer Durchstiegsöffnung 17 ausgestattet, welche den unteren und den oberen Aufenthaltsraum verbindet und durch welche Personen, z.B. unter Verwendung einer an die Durchstiegsöffnung 17 angelehnten Leiter vom unteren in den oberer Raum und umgekehrt gelangen.

Zur Erweiterung des nutzbaren Raumvolumens kann an der Außenseite des unteren Raums ein aufblasbares Vordach 20 aus aufblasbaren Stützrohren 21 ausgebildet sein.

## Patentansprüche

1. Mobile Behausung mit einem unteren Raum und einem darüber angeordneten oberen Raum, wobei der Boden des oberen Raums zumindest abschnittsweise von einem aufblasbaren, im aufgeblasenen Zustand plattenartigen Bodenkörper (4,13) gebildet ist, dessen Deck- und Bodenlage aus einem flexiblen Material bestehen und durch eine Vielzahl von Verbindungsfäden oder -fasern miteinander verbunden und im aufgeblasenen Zustand in einem maximalen Normalabstand zueinander gehalten sind, und wobei der aufblasbare Bodenkörper (4,13) zumindest teilweise auf einem Stützkörper, wie z.B. einem Dach (2,12) aufliegt, **dadurch gekennzeichnet, dass** der aufblasbare Bodenkörper (4,13) und/oder der Stützkörper, wie z.B. das Dach (2), eine Durchstiegsöffnung (9,10,17) aufweist, über welche der untere und der obere Raum miteinander verbunden sind.

2. Mobile Behausung nach Anspruch 1, **dadurch gekennzeichnet, dass** der aufblasbare Bodenkörper (4,13) im aufgeblasenen Zustand den Rand des Stützkörpers überragt.

3. Mobile Behausung nach Anspruch 2, **dadurch gekennzeichnet, dass** ein den Stützkörper überragender Abschnitt (8) des Bodenkörpers (4) im nicht aufgeblasenen Zustand auf den Stützkörper faltbar ist.

4. Mobile Behausung nach Anspruch 1, 2 oder 3, **dadurch gekennzeichnet, dass** der untere Raum von einem Innenraum eines Fahrzeugs (1), wie z.B. eines Kraftfahrzeugs oder Wohnwagens, gebildet ist und dass der aufblasbare Bodenkörper (4) auf dem Fahrzeugdach (2) oder einem darauf angebrachten Träger aufliegt.

5. Mobile Behausung nach Anspruch 4, **dadurch gekennzeichnet, dass** der obere Raum nach oben hin von einem Aufstell- oder Hubdach (3) begrenzt ist, das von einer dem Fahrzeugdach (2) benachbarten Position in eine von dem Fahrzeugdach (2) beabstandete Position schwenkbar oder verlagerbar ist.

6. Mobile Behausung nach Anspruch 4 oder 5, **dadurch gekennzeichnet, dass** die Durchstiegsöffnung (9) im Fahrzeugdach (2) ausgebildet ist und die Durchstiegsöffnung (9) des Fahrzeugdachs (2) vorzugsweise mit einer im aufblasbaren Bodenkörper (4) ausgebildeten Durchstiegsöffnung (10) fluchtet.

7. Mobile Behausung nach Anspruch 4, 5 oder 6, **dadurch gekennzeichnet, dass** der aufblasbare Bodenkörper (4) wenigstens einen sich beim Aufblasen seitlich über den Rand des Fahrzeugdachs (2) hinaus auffaltbaren Bereich (8) aufweist.

8. Mobile Behausung nach einem der Ansprüche 4 bis 7, **dadurch gekennzeichnet, dass** der obere Raum flexible Seitenwände (6) aufweist, die einerseits mit dem Aufstell- oder Hubdach (3) und andererseits mit einem Rand des aufblasbaren Bodenkörpers (4) verbunden sind.

9. Mobile Behausung nach Anspruch 1, 2 oder 3, **dadurch gekennzeichnet, dass** der untere Raum unter dem den Stützkörper, wie z.B. das Dach (12), überragenden Abschnitt des Bodenkörpers (13) ausgebildet und die Durchstiegsöffnung (17) im aufblasbaren Bodenkörper (13) ausgebildet ist.

10. Mobile Behausung nach Anspruch 9, **dadurch gekennzeichnet, dass** der aufblasbare Bodenkörper (13) ein aufblasbares Zelt (14) trägt, welches den oberen Raum ausbildet.

11. Mobile Behausung nach Anspruch 10, **dadurch gekennzeichnet, dass** das aufblasbare Zelt (14) ein aufblasbares Traggerüst und eine am Traggerüst abgestützte Zelthaut (16) aufweist.

12. Mobile Behausung nach Anspruch 12, **dadurch gekennzeichnet, dass** das Traggerüst wenigstens ein aufblasbares, insbesondere mehrfach abgewinkeltes oder gebogenes Rohr (15) aufweist.
